# EUROPÄISCHE PATENTANMELDUNG

(11) **EP 4 564 213 A1**
(43) Veröffentlichungstag der Anmeldung: **04.06.2025**
(21) Anmeldenummer: 23213784.4
(22) Anmeldetag: 01.12.2023
(51) Int. Cl.: G06F 21/62

(54) **VERFAHREN ZUM VERARBEITEN VON DATEN IN EINEM VERTEILTEN NETZWERK**

(71) Anmelder: itesign GmbH, 44225 Dortmund (DE)
(72) Erfinder: Wimmer, Jan Philippe, 44225 Dortmund (DE)
(74) Vertreter: Hempfing, Lutz Frederick

(57) **Zusammenfassung**

Die Erfindung betrifft ein Verfahren zum Verarbeiten von Daten in einem verteilten Netzwerk, aufweisend:
- ein Datenmodell mit vier Ebenen;
- einen geräteunabhängigen Adressverweis-Standard;
- Vertragsinformationen, welche obligatorisch mit einem konkreten Datensatz verknüpft sind; und
- eine Kontrollinstanz zum Prüfen und Freigeben von Zugriffen auf die Datensätze, wobei zumindest die Datensätze derart standardisiert sind, dass diese geräteunabhängig speicherbar und lesbar sind, und
wobei die Vertragsinformationen teilnehmerabhängige Zugriffsrechte beinhalten, wobei auf eine Zugriffsanfrage mittels der Kontrollinstanz folgende Schritte ausgeführt werden:
a. Abgleichen der Identität des Teilnehmers mit den zugehörigen Vertragsinformationen und Ermitteln einer Zugriffsberechtigung des anfragenden Teilnehmers;
b. Ermitteln zumindest einer beschränkenden Zugriffsbedingung und Prüfen, ob die zumindest eine ermittelte beschränkende Zugriffsbedingung erfüllbar ist; und ausschließlich bei Vorliegen einer Zugriffsberechtigung und bei Erfüllbarkeit der zumindest einen Zugriffsbedingung:
c. Freigeben eines Zugriffs im Rahmen der zumindest einen Zugriffsbedingung auf den angefragten konkreten Datensatz.

Mit dem hier vorgeschlagenen Verfahren ist eine private Datenhoheit mit einer einfachen Umsetzbarkeit und zugleich Geräteunabhängigkeit für den digitalen Austausch von Datensätzen geschaffen.

## Beschreibung

Die Erfindung betrifft ein Verfahren zum Verarbeiten von Daten in einem verteilten Netzwerk.

Nachdem in der anfänglichen Entwicklung und Verbreitung des Internets zunächst der Ansatz vorherrschte, dass einzelne (private oder öffentliche) Rechner die auf diesen gespeicherten Daten standortunabhängig zu teilen und zu versenden, ist derzeit der nahezu ausnahmslose Ansatz, dass große Serverzentren die Daten vorhalten und privat keine oder nur wenige Daten ohne eine Back-up-Kopie auf einem externen Server vorliegen. Solche Serverzentren werden in aller Regel privat betrieben. Häufig werden die angebotenen Speicherplätze nicht nur als Bezahlservice angeboten, sondern zudem werden private Daten abgefragt. Damit gibt der individuelle Nutzer seine Hoheit über seine Daten auf und muss dem Serverdienstanbieter vertrauen.

Spätestens der Cambridge-Analytica-Skandal hat jedoch aufgezeigt, dass die Agglomeration von personenbezogenen Daten gesamtgesellschaftlichen Einfluss haben kann und dass personenbezogene Daten eine ausgesprochen schützenswerte Ressource sind, welche ganzheitliche Rückschlüsse über unsere politische und sexuelle Orientierung, über medizinisch relevante Informationen und über unsere Persönlichkeit liefern. In wessen Hände diese Informationen gelangen, sollten Individuen und Unternehmen selbstständig entscheiden können.

Eine konventionelle Lösung mit eigenem Server birgt vor dem Hintergrund von massiven Hackerangriffen für Privatpersonen, aber auch für Unternehmen nur eine Scheinlösung, welche zudem bei der Person viel Aufwand für die Wartung verursacht. Ein Ansatz (wie beispielsweise in der Anmeldeschrift US 2023 / 0 005 391 A1 beschrieben) ist, dass die gespeicherten Daten zerstückelt abgelegt werden und somit ein Hackerangriff nur wenige bis nutzlose Daten erbeuten kann.

Hiervon ausgehend liegt der vorliegenden Erfindung die Aufgabe zugrunde, die aus dem Stand der Technik bekannten Nachteile zumindest teilweise zu überwinden. Die erfindungsgemäßen Merkmale ergeben sich aus den unabhängigen Ansprüchen, zu denen vorteilhafte Ausgestaltungen in den abhängigen Ansprüchen aufgezeigt werden. Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, welche ergänzende Ausgestaltungen der Erfindung umfassen.

Die Erfindung betrifft ein Verfahren zum Verarbeiten von Daten in einem verteilten Netzwerk, aufweisend zumindest die folgenden Komponenten:
- ein Datenmodell mit vier Ebenen, von welchen die grundständigste Ebene die Datenebene ist und die übergeordneten Ebenen die Datenstrukturen in der jeweils untergeordneten Ebene zunehmend abstrakt definieren;
- einen geräteunabhängigen Adressverweis-Standard, mit welchem jeweils ein konkreter Datensatz in der Datenebene mit einem zugehörigen Adressverweis adressiert ist;
- Vertragsinformationen, welche obligatorisch mit einem konkreten Datensatz verknüpft sind; und
- eine Kontrollinstanz zum Prüfen und Freigeben von Zugriffen auf die Datensätze, wobei zumindest die Datensätze mithilfe der drei untergeordneten Ebenen derart standardisiert sind, dass diese geräteunabhängig speicherbar und lesbar sind, und wobei die Vertragsinformationen teilnehmerabhängige Zugriffsrechte auf den zugehörigen konkreten Datensatz beinhalten,
wobei das Verfahren zumindest die folgenden mittels der Kontrollinstanz ausgeführten Schritte umfasst:
auf eine Zugriffsanfrage eines Teilnehmers mit einer computerlesbaren Identität auf einen konkreten Datensatz über einen zugehörigen Adressverweis:
**a.** Abgleichen der Identität des Teilnehmers mit den zugehörigen Vertragsinformationen und Ermitteln einer Zugriffsberechtigung des anfragenden Teilnehmers;
**b.** Ermitteln zumindest einer beschränkenden Zugriffsbedingung gemäß den zugehörigen Vertragsinformationen für den anfragenden Teilnehmer und Prüfen, ob die zumindest eine ermittelte beschränkende Zugriffsbedingung erfüllbar ist; und ausschließlich bei Vorliegen einer Zugriffsberechtigung des anfragenden Teilnehmers und bei Erfüllbarkeit der zumindest einen Zugriffsbedingung:
**c.** Freigeben eines Zugriffs im Rahmen der zumindest einen Zugriffsbedingung auf den angefragten konkreten Datensatz, wobei ohne ein solches Freigeben eines Zugriffs ein Teilnehmer mittels der Kontrollinstanz an einem Zugriff auf den betreffenden Datensatz gehindert ist.

In der vorhergehenden und nachfolgenden Beschreibung verwendete Ordinalzahlen dienen, sofern nicht explizit auf das Gegenteilige hingewiesen wird, lediglich der eindeutigen Unterscheidbarkeit und geben keine Reihenfolge oder Rangfolge der bezeichneten Komponenten wieder. Eine Ordinalzahl größer eins bedingt nicht, dass zwangsläufig eine weitere derartige Komponente vorhanden sein muss.

Mit dem hier vorgeschlagenen Verfahren erhält ein Teilnehmer (natürliche und juristische Personen, sowie Maschinen) die Möglichkeit, mit zeitlich und mit Blick auf die Kosten beherrschbaren Mitteln die Hoheit über seine Daten zu behalten. Der Kernaspekt ist hierbei, dass eine Standardisierung geschaffen ist, welche das Lesen und Speichern (und alle anderen Zugriffsarten) von Datensätzen geräteunabhängig ermöglicht. Gleichzeitig ist die Standardisierung kein starres Gerüst, in welches sich die Daten einpassen müssen. Vielmehr wird mit dem Anlegen oder Bearbeiten von Datensätzen entweder ein vorhandener Standard angewendet oder, sofern kein passender existiert, ein neuer geschaffen. Der neue Standard erfüllt aber die minimalen Bedingungen innerhalb des Datenmodells, sodass das Lesen und Schreiben von Dritten (sofern nicht gesperrt) möglich ist.

Mit dem Verfahren ist darüber hinaus eine Sicherheit geschaffen, dass keine unerwünschten Zugriffe auf die Datensätze des Teilnehmers stattfinden. Der Teilnehmer hat damit volle Kontrolle über seine Datensätze. Sofern ein Dritter an die Datensätze des Teilnehmers ohne Kenntnis und Freigabe des Teilnehmers gelangt ist, ist dieser Dritte nachweisbar nicht legal an diese Datensätze gelangt und ist somit rechtlich belangbar. Das mag zwar für einen schwer zu identifizierenden Hacker nicht ausreichend schützend sein, aber die erbeuteten Datensätze sind für potentielle Käufer damit unbrauchbar.

Kernvoraussetzung für die Verarbeitung von Daten ist deren Vorliegen in strukturierter Form. In einer Ausführungsform ist es möglich, Daten zunächst in einer unstrukturierten Form zu speichern und nachträglich, beispielsweise erst bei Bedarf, zu strukturieren, um diese zu verarbeiten. Derzeit befinden sich in vielen Systemen und insbesondere auf Webseiten eine Vielzahl an unstrukturierten Daten, welche eine maschinelle Verarbeitung erschweren. Auf der Basis des Vorschlags von dem Begründer des modernen Internets Tim Berners-Lee wurde das Konzept des Semantic Web entwickelt. Das Konzept führt verschiedene Standards zusammen, mit deren Hilfe eine Selbstbeschreibung von Daten realisierbar ist. Die Standards betreffen: ein Datenmodell; die Bezeichner von Daten; die Definition der Vokabulare für die Beschreibung von Datenmodellen (bzw. Ontologien) sowie Serialisierungen des Datenmodells. Grundsätzlich ist das Konzept des Semantic Web mit verschiedenen Standards kompatibel und findet bereits in multiplen Kontexten Anwendung.

Standards, welche auf dem Semantic Web oder auf vergleichbaren Ideen (etwa Web3) basieren, haben die Gemeinsamkeit, dass sie auf einem Meta-Modellbasierten Datenmodell fußen. Der im Nachfolgenden angesprochene Meta-Metamodell-basierte Ansatz ist vorteilhaft für das vorliegende Verfahren, weil alle darin verwendeten abstrahierten Meta-Modelle demselben Regelwerk folgen. Die Verwendung eines Meta-Metamodells ist nicht zwingend erforderlich, ein solches Regelwerk müsste jedoch für jedes andere Datenmodell aufgebaut werden. Am häufigsten findet das sogenannte Resource Description Framework [RDF] Anwendung. Weiterhin finden zum Beispiel JSON-LD, JSON Schema und Activity Streams Verwendung in Semantic-Web-Anwendungen.

Die bisher existenten Standards hatten nicht die Durchsetzung des Semantic Web zur Folge. Die Idee des Semantic Web hat außerdem nicht zum Ziel, zur Erlangung der Datenhoheit von natürlichen und juristischen Personen beizutragen. Deshalb setzt das vorliegende Verfahren auf ein jene Idee des Semantic Web aufgreifendes Datenmodell auf und erweitert dieses. Beispielhaft wird die Umsetzung des hier vorgeschlagenen Verfahrens in Anlehnung an den Standard Essential Meta Object Family [EMOF] der Object Management Group in der nachfolgenden Ausführung beschrieben. Das hier vorgeschlagene Verfahren ist jedoch mit weiteren Datenmodellen wie JSON-LD, Resource Description Framework oder relationalen Datenbanken umsetzbar. Die Verwendung der Essential Meta Object Facility [EMOF] der Object Management Group ist besonders empfehlenswert. EMOF ist eine von zwei möglichen Implementierungsvarianten der Meta Object Facility in der Version 2.5.1 [MOF 2].

Grundlegend beinhalten Datenmodelle zunächst eine Syntax. Die in einem Datenmodell getätigten Aussagen sind aber interpretationsbedürftig. Eine Interpretationsfähigkeit erlangt ein Datenmodell durch die Verwendung eines gemeinsamen Vokabulars. Beinhaltet das Vokabular darüber hinaus Regeln, welche die korrekte Verwendung von durch das Vokabular definierten Ressourcen enthält, wird das Vokabular als Ontologie bezeichnet. Ontologien weisen typischerweise folgende Bestandteile auf: Klassen, Typen, Instanzen, Relationen, Vererbung und Axiome.

Klassen bezeichnen die Beschreibung gemeinsamer Eigenschaften. Klassen können in Form von Oberklassen und Unterklassen hierarchisch angeordnet werden. Typen bezeichnen die Repräsentation von Objekttypen, deren Darstellung in Klassen erfolgt. Instanzen sind Repräsentationen von Objekten. Relationen beschreiben die Beziehungen zwischen Instanzen und werden auch Eigenschaften genannt. Relationen von Klassen können auch vererbt werden, sodass die Relationen an das erbende Element weitergegeben werden. Eine Mehrfachvererbung bezeichnet das Erben von mehr als einer einzigen Klasse. Axiome bezeichnen ubiquitär wahre Aussagen. Axiome werden zumeist verwendet, um Wissen wiederzugeben, welches nicht aus Klassen abgeleitet werden kann. Auch konkrete Serialisierungen von Datenmodellen sind stark von letzteren abhängig. Bei Serialisierungen handelt es sich um einen Übersetzungsprozess einer Datenstruktur oder eines Objektstatus in ein speicherbares oder übertragbares Format, welches eine spätere Rekonstruktion der so gespeicherten oder übermittelten Daten ermöglicht. Diese Definitionen sind so oder ähnlich auch in anderen Datenmodellen wie bspw. oben genannt neben EMOF anzutreffen.

Daten und Datentypen sind in einem standardisierten Datenmodell angelegt beziehungsweise anlegbar. Auf Basis dieses Datenmodells werden alle Daten strukturiert, sodass das Speichern und Verarbeiten von Daten automatisiert erfolgen kann, ohne dass eine Wiederaufbereitung notwendig ist. Dies ermöglicht es, dieselben Daten in verschiedenen Applikationen zu referenzieren und diese anschließend unmittelbar weiterzuverwenden, weil deren Strukturierung für beide Applikationen verständlich ist.

Auf der grundständigsten Ebene befindlich sind konkrete Daten, also Objekte der Realität. Auf der nächsten übergeordneten (Abstraktions-) Ebene befinden sich Teilnehmermodelle (Domänenmodelle), welche die Daten der grundständigsten (also konkreten) Ebene definieren. Auf der darauf folgenden übergeordneten (zweiten Abstraktions-) Ebene befinden sich Meta-Modelle. Bei einem Meta-Modell handelt es sich um ein Modell, welches ein Modell definiert. Es beschreibt also die Struktur des Modells von konkreten Daten. Die allen anderen übergeordnete (dritte und letzte Abstraktions-) Ebene umfasst ein Meta-Metamodell. Hier wird also modelliert, wie Meta-Modelle strukturiert werden. Wichtig ist, dass die allem übergeordnete Ebene den Abschluss der Metaisierung bedeutet, weil diese ansonsten unendlich fortgeführt werden könnte. Dies wird dadurch erreicht, dass das Meta-Metamodell sich gleichfalls selbst definiert.

Die Vorteile von EMOF gegenüber anderen Standards für Datenmodelle sind darin begründet, dass EMOF besonders einfach zu verstehende Regeln für das Modellieren von Metadaten verwendet, welche grundlegend an das UML-Class-Modelling angelehnt sind. Die Unified Modeling Language [UML] gilt als Industriestandard zur Spezifikation, Konstruktion, Dokumentation und Visualisierung von Software, deren Komponenten und anderen Systemen und ist gemäß ISO 19505 genormt. Des Weiteren ist EMOF plattformunabhängig einsetzbar und erlaubt diverse technologische Mappings ausgehend von UML-Modellen und UML-Profilen. Außerdem wird eine große Varietät an Tools unterstützt, welche das Modellieren auf Meta-Ebene gestatten. Auch hier können alle Tools verwendet werden, welche zur UML-Modellierung genutzt werden. Der Vorteil des Rekurses auf den UML-Standard in den genannten Kontexten ist in der großen Verbreitung von UML begründet, weil diese Modellierungssprache einem Industriestandard entspricht. Dies gestattet eine hohe Anschlussfähigkeit an vorherige Metamodelle von Software-Infrastruktur.

Ein Adressverweis-Standard definiert, wie ein konkreter Datensatz auffindbar ist, und zwar mittels eines zugehörigen Adressverweises. Verbreitet ist beispielsweise in einer Semantic-Web-Implementierung der Adressverweis, welcher als URI [engl.: Uniform Resource Identifier] integriert wird. URls basieren auf dem Internetprotokollstandard Internationalized Resource Identifier [IRI]. Jeder URI dient als eindeutige Bezeichnung ein und derselben Ressource. Umgekehrt gilt dies nicht zwangsläufig: Eine Ressource kann mehrere URIs haben. Der URI kann gleichfalls als Adresse zum Abrufen von weiteren Daten über die bezeichnete Ressource genutzt werden. URls können in verschiedenen Varianten genutzt werden, etwa als der am weitesten verbreitete URL [engl.: Uniform Resource Locator]. In Abhängigkeit des verwendeten Datenmodells bieten sich unterschiedliche URI-Schemata an, gemäß den offiziell bei der IANA [engl.: Internet Assigned Numbers Authority] registrierten Schemata.

Die Vertragsinformationen sind solche Informationen, welche den Zugriff auf einen zugehörigen konkreten Datensatz mit Zugriffsrechten regeln. Es können pro Datensatz mehrere Verträge mit unterschiedlichen Vertragsinformationen existieren, welche den Zugriff von einzelnen oder mehreren Teilnehmern auf den betreffenden Datensatz definieren. Dies ermöglicht verschiedene Formen der Kollaboration. In den Vertragsinformationen sind beispielsweise enthalten, welche (Art von) Teilnehmern beziehungsweise Unternehmen Zugriff bekommen dürfen, welche Rechte ein zugriffsberechtigter Teilnehmer hat und wie lange oder wie oft ein zugriffsberechtigter Teilnehmer Zugriff erhalten kann. Beispielsweise soll ein Versicherer einen Datensatz, welcher die Personendaten einer eine Versicherung beantragenden Person enthält, ausschließlich lesen können, ausschließlich in einem bestimmten Zeitfenster und/oder ausschließlich ein einziges Mal, oder alternativ ausschließlich bis zu einem regulären Ende einer Versicherungslaufzeit.

Es sei darauf hingewiesen, dass die Vertragsinformationen Zugriffsrechte beinhalten, wobei sich diese in Zugriffsberechtigung und Zugriffsbedingung aufteilen lassen. Die Zugriffsberechtigung umfasst dabei die Art des Zugriffs, also beispielsweise Lesen, Schreiben, Kopieren, Verschieben, Löschen und weitere Aktionen. Die Zugriffsbedingung betrifft den zugreifenden Teilnehmer, die Dauer, die Anzahl von Wiederholungen, ein Zeitfenster und andere Bedingungen.

Die Kontrollinstanz ist entweder teilnehmerseitig unabhängig oder wird durch einen Dienstleister oder eine öffentliche Einrichtung gestellt. Diese Kontrollinstanz ist wie ein Türsteher zu verstehen. Es sei darauf hingewiesen, dass die Kontrollinstanz selbst (bevorzugt) nicht oder zumindest nicht zwangsläufig Zugriff auf die Datensätze hat. In einer Ausführungsform ist die Zugriffsberechtigung der Kontrollinstanz in einer individuellen Vertragsinformation geregelt, in einer Ausführungsform ist generell kein Zugriff für eine Kontrollinstanz ermöglicht, in einer weiteren Ausführungsform erhält die Kontrollinstanz Zugriff (beispielsweise zur automatisierten Ausführung).

Es sei darauf hingewiesen, dass es mitunter auf Umwegen oder durch Zufall möglich sein kann, ohne die Prüfung und Freigabe durch die Kontrollinstanz an einen Datensatz zu gelangen. Jedoch ist auch dann sichergestellt, dass ein Nachweis einer Berechtigung für einen Zugriff auf einen solchen Datensatz nicht von dem betreffenden Teilnehmer erbracht werden kann. Bevorzugt sind dazu die Vertragsinformationen derart separat vorgehalten, dass nur der Eigentümer des Datensatzes und die Kontrollinstanz (gegebenenfalls unter der Notwendigkeit einer Freigabe eines Eigentümers oder eines berechtigten Teilnehmers, welcher der Kontrollinstanz nicht vorliegt) zusammengebracht werden können. Alternativ oder zusätzlich bestehen grundsätzlich keine Schreibrechte für Vertragsinformationen für jemand anderen als den Eigentümer, oder dessen aktive Zustimmung zu einer Änderung an den Vertragsinformationen ist notwendig. Alternativ oder zusätzlich ist die Kontrollinstanz dazu eingerichtet, dass ein Zugriff auf einen zu schützenden Datensatz von ihr aufgezeichnet wird und/oder unmittelbar eine Nachricht an den Eigentümer auslöst.

In einer Ausführungsform ist zum Schutz der Öffentlichkeit ein Zugriff für ein entsprechendes hoheitliches Organ möglich, wobei der Eigentümer zwangsläufig unterrichtet wird und/oder der Kontrollinstanz ein berechtigender Beschluss (beispielsweise ein richterlicher Durchsuchungsbeschluss) vorgelegt werden muss. In einer Ausführungsform ist dies zwangsläufig und gut verständlich aufbereitet automatisch von einem Eigentümer nicht veränderbar in den Vertragsinformationen enthalten. Damit ist eine Rechtssicherheit geschaffen, wie wir sie in der physischen Welt bereits erwarten dürfen.

Es sei darauf hingewiesen, dass nicht jeder Datensatz zwangsläufig solche Daten enthalten muss beziehungsweise eine solche Art von Inhalt aufweisen muss, welcher an sich vor einer Lesbarkeit oder Kopierbarkeit geschützt sein muss. Beispielsweise handelt es sich um online angebotene Waren und/oder Dienstleistungen. Diese sind beispielsweise vollständig frei lesbar, allerdings sollen sie nicht (von jedem) veränderbar und/oder bedingungslos verbreitbar sein. Beispielsweise ist der Zugriff auf einen Artikel eines digitalen Zeitungsmagazins an eine Entrichtung einer Gebühr bedingt geknüpft. Beispielsweise ist der Zugriff an die Herausgabe einer Information geknüpft, beispielsweise das benutzte Endgerät, Geschlecht, Adresse oder Beruf. Andererseits gibt es eine Gruppe von Teilnehmern, welche freien Zugriff haben sollen, beispielsweise die Mitarbeiter des Eigentümers. Das ist gegebenenfalls personenspezifisch, standortspezifisch und/oder von einem Zugriffstoken abhängig gestaltet. Beispielsweise sind Zugriffsrechte auf die Dauer eines Projekts oder einer befristeten Anstellung festgelegt.

Es wird weiterhin in einer vorteilhaften Ausführungsform des Verfahrens vorgeschlagen, dass die Datensätze der Datenebene eine Klassifizierung aufweisen und der Dateninhalt zumindest ein Attribut beinhaltet,
wobei bei einer Mehrzahl von Attributen zumindest eines der Attribute, bevorzugt eines Attribut-Wert-Paars, die Datenform und/oder Datenmenge des zumindest einen anderen Attributs beschränkt, bevorzugt definiert.

Innerhalb des Meta-Metamodells ist eine modellinterne Klassifizierung von Datensätzen der Datenebene sinnvoll, weil Daten so maschinell verarbeitbar sind (vgl. obige Ausführungen zum Semantic Web).

Bevorzugt existieren zwei Varianten von Klassifizierung, welche die maschinelle Verarbeitung der Daten gewährleisten. Innerhalb dieser bevorzugten Ausführungsform hat eine jede Instanz einen Typen. Im Kontext der Klassifizierung sind Instanzen gemeint, welche dabei entweder vom Typ Klasse oder vom Typ Attribut sind (vergleiche hierzu die Ausführungen zum Datenmodell) und mit den primitiven Typen kombiniert werden (vergleiche beispielsweise primitive Typen in EMOF). Instanzen vom Typ Klasse beinhalten Informationen, welche die Attribute der Attribut-Wert-Paare von Instanzen dieser Klassen beschreiben. Instanzen vom Typ Attribut beschreiben die gültigen Werte jedes Attribut-Wert-Paars in den Instanzen der Klasse, in welcher sie definiert sind. Mithilfe dieser Informationen kann der Typ Klasse gemeinsam mit dem Typ Attribut sich selbst beschreiben.

Beispielhaft sei die Funktionalität an Personendaten beschrieben:
Wenn ein Personendatensatz in einer Instanz gespeichert werden soll, könnte ihr Typ einer Klasse "Person" angehören. Der Datensatz könnte des Weiteren ein Attribut-Wert-Paar <Nachname: "Müller"> beinhalten.

Wenn ein Datensatz mehrere Attribute aufweist, beinhaltet der Dateninhalt innerhalb einer bevorzugten Ausführungsform genau ein Attribut-Wert-Paar, welches die Datenform und/oder die Datenmenge beschränkt oder in einer vorteilhaften Ausführungsform definiert. Das Attribut-Wert-Paar beschreibt hiermit den Typ des so klassifizierten Datensatzes.

In einer bevorzugten Ausführungsform werden solche Datensätze, welche nicht innerhalb des Modells angelegt wurden und nicht der modellinternen Klassifizierung entsprechen, einer Fallback-Klassifizierung zugeordnet und anschließend in die modell-interne Klassifizierung überführt.

Es wird weiterhin in einer vorteilhaften Ausführungsform des Verfahrens vorgeschlagen, dass die Datenstrukturen eine Klassifizierung aufweisen und der Dateninhalt zumindest ein Attribut beinhaltet,
wobei beim Anlegen eines Datensatzes und/oder einer Datenstruktur eine vorhandene passende Klassifizierung benutzt wird oder, wenn eine passende Klassifizierung nicht vorhanden ist, eine passende Klassifizierung erzeugt wird.

Mit dieser Ausführungsform ist erzielt, dass auf maschineller Seite eine Lesbarkeit umgehend geschaffen wird, wenn neue Daten angelegt werden. Gleichzeitig erlaubt es die erforderliche Flexibilität, um die menschliche Wirklichkeit auf der Datenebene (und übergeordneten Ebenen) abzubilden. Die Erfahrung zeigt, dass sich selbst bei sorgfältigster Überlegung nicht alle Spielarten und Kombinationsmöglichkeiten vorhersehen lassen. Wenn neue Daten angelegt werden, werden diese aber direkt in eine (zumindest teilweise) vorhandene Struktur überführt und in der Regel enthalten neue Daten lediglich zu einem Teil neue Eigenschaften.

In einer bevorzugten Ausführungsform wird eine neu geschaffene Klassifizierung in Zukunft für andere Anwendungen, bevorzugt für andere, besonders bevorzugt für alle, Teilnehmer eingesetzt.

Es wird weiterhin in einer vorteilhaften Ausführungsform des Verfahrens vorgeschlagen, dass die Datensätze und/oder die Adressverweise individuell verschlüsselt sind,
wobei bevorzugt die Kontrollinstanz keinen passenden Schlüssel dazu besitzt.

Jegliche in den vorherigen Abschnitten besprochenen Attribute und Werte können optional auf Typebene, Attributebene und Wertebene (sowie jede Teilmenge davon) verschlüsselt werden. Das bedeutet, dass die verwendeten Typ-URIs einer Instanz, die Attribut-URIs und/oder Werte eines Attribut-Wert-Paars nicht lesbar sind, wenn der entsprechende Entschlüsselungsschlüssel nicht bekannt ist.

Für eine Maximierung der Datenhoheit seiner Teilnehmer ist eine Verschlüsselungsart vorgesehen; denn erst durch eine Verschlüsselung steht ein Datensatz nicht mehr ohne Weiteres bei von einem Server gehosteten Datensätzen für einen Vollzugriff von Serverseite zur Verfügung. Es sei darauf hingewiesen, dass auch lokal gehostete Datensätze verschlüsselbar sind beziehungsweise bereits unverschlüsselt diese Datenhoheit aufgrund von einer entsprechenden Abfragestruktur mit einer internen oder externen Kontrollinstanz sichergestellt ist. Mittels einer Verschlüsselung kann auch verhindert werden, dass Dritte, welche unberechtigt Zugriff auf den Server erlangen, ebenfalls unmittelbar vollumfänglichen Zugriff auf die dort befindlichen Daten erlangen.

Beispielhaft wird die Umsetzung dieses Aspekts des Verfahrens in Anlehnung an den Standard OpenPGP nach RFC4880 in der nachfolgenden Ausführung beschrieben. Dieser spezifiziert unter anderem Formate und konkrete Verfahren für hybride Verschlüsselung, kryptographische Identitäten und digitale Signaturen (inklusive für die Abbildung von Vertrauensbeziehungen zwischen Identitäten und/oder Schlüsselmaterial). Unter anderem für Nachrichtenverschlüsselung und Gruppenverschlüsselung kann an Stelle von OpenPGP alternativ auf den Standard Messaging Layer Security [MLS] zurückgegriffen werden.

Die hybride Verschlüsselung kombiniert Techniken aus der symmetrischen und der asymmetrischen Kryptographie. Im Unterschied zu einem digitalen Signaturverfahren besitzt dabei jeder Empfänger ein Schlüsselpaar, dessen öffentlicher Schlüssel einem Sender verfügbar gemacht wird. Im einfachen Fall verschlüsselt der Sender mithilfe dieses öffentlichen Schlüssels einen neu generierten symmetrischen Schlüssel. Mit letzterem werden die eigentlichen Nutzdaten (beispielsweise per AES [engl.: Advanced Encryption Standard]) verschlüsselt. Der Empfänger entschlüsselt den symmetrischen Schlüssel mithilfe seines privaten Schlüssels und kann anschließend die Nutzdaten entschlüsseln. Gründe für die Nutzung von hybriden Verschlüsselungsverfahren liegen vor allem in der Notwendigkeit einer einfachen und effizienten Schlüsselvereinbarung für das symmetrische Verfahren. Zudem ist die Nutzung reiner asymmetrischer Verfahren für die Verschlüsselung großer Datenmengen wegen ihrer Ineffizienz nicht praktikabel.

Bei der Verwendung von Techniken der asymmetrischen Kryptographie muss die Authentizität der übertragenen öffentlichen Schlüssel geschützt werden, um Man-inthe-Middle-Angriffe zu verhindern. Dabei könnte ein Angreifer ein eigenes Schlüsselpaar generieren, sich zwischen die ehrlichen Parteien schalten und jeweils mit diesen öffentliche Schlüssel austauschen. Abgefangene Nachrichten werden dann entschlüsselt, mitgelesen und gegebenenfalls modifiziert an den ursprünglich intendierten Empfänger weitergeleitet. Mögliche Lösungen umfassen den direkten Austausch von Schlüsseln und/oder Zertifikaten zwischen den Parteien, eine Public-Key-Infrastruktur inklusive Zertifikatsautoritäten oder Web-of-Trust-basierte Ansätze.

In einer Ausführungsform soll das zwar für ein Web of Trust gewünschte Vertrauen in diejenigen Teilnehmer, welche hier aktiv sind, bekannt, also maschinell auslesbar sein. Andererseits sollen diese Informationen nicht frei für jeden und/oder immer lesbar, also interpretierbar sein, indem die Identität des Teilnehmers in den fehlenden Schlüssel eingebettet ist. Somit ist die Identität einzig zusammen mit dem vorhandenen Schlüssel auslesbar, also einzig in der Situation, wenn eine Prüfung durchgeführt werden muss und zudem einzig von der Kontrollinstanz, und nicht (zwangsläufig beziehungsweise standardmäßig) von dem anfragenden Teilnehmer.

Die digitale Signatur ist ein Konzept aus der asymmetrischen Kryptographie, was zum Schutz der Authentizität von ausgetauschten Daten dient. Ein Sender generiert ein Schlüsselpaar, bestehend aus einem privaten und einem öffentlichen Schlüssel. Der private Schlüssel muss geheim gehalten werden. Im Gegensatz dazu wird der öffentliche Schlüssel einem jeden Empfänger auf eine Authentizität wahrende Weise zugänglich gemacht. Eine mittels des privaten Schlüssels erstellte digitale Signatur über einer Nachricht kann anschließend allein durch Verwendung der öffentlichen Schlüssel verifiziert werden.

Es wird weiterhin in einer vorteilhaften Ausführungsform des Verfahrens vorgeschlagen, dass die zugehörigen Vertragsinformationen verschlüsselt sind, wobei bevorzugt:
- die Kontrollinstanz zumindest einen weniger von mehreren Schlüsseln besitzt, mittels welchen allen gemeinsam eine Schlüsselgruppe bildbar ist, wobei ausschließlich mittels der gebildeten Schlüsselgruppe die betreffenden Vertragsinformationen für die Kontrollinstanz lesbar machbar sind, und
- mit der Zugriffsanfrage eines Teilnehmers der zumindest eine fehlende Schlüssel zum Bilden der passenden Schlüsselgruppe für die Kontrollinstanz nutzbar gemacht ist,
wobei weiter bevorzugt der zumindest eine fehlende Schlüssel die computerlesbare Identität des Teilnehmers oder in dieser Identität für die Kontrollinstanz standardisiert auslesbar enthalten ist.

In einer vorteilhaften Ausführungsform ist die Schlüsselgruppe von genau zwei Schlüsseln gebildet und die Kontrollinstanz besitzt einen der beiden Schlüssel. Der andere Schlüssel wird bei einer Zugriffsanfrage bereitgestellt, und zwar entweder direkt von dem anfragenden Teilnehmer oder über eine von diesem ausgelöste Anfrage von dem Eigentümer der betreffenden Vertragsinformationen.

In einer Ausführungsform soll das zwar für ein Web of Trust gewünschte Vertrauen in die Teilnehmer, welche hier aktiv sind, bekannt, also maschinell auslesbar sein. Andererseits sollen diese Informationen nicht frei für jeden und/oder immer lesbar, also interpretierbar sein, indem die Identität des Teilnehmers in den fehlenden Schlüssel eingebettet ist. Somit ist die Identität einzig zusammen mit dem vorhandenen Schlüssel auslesbar, also einzig in der Situation, wenn eine Prüfung durchgeführt werden muss und zudem einzig von der Kontrollinstanz, und nicht (zwangsläufig beziehungsweise standardmäßig) von dem anfragenden Teilnehmer.

Es wird weiterhin in einer vorteilhaften Ausführungsform des Verfahrens vorgeschlagen, dass zumindest eine der folgenden Komponenten mittels der Identität eines betreffenden Teilnehmers beziehungsweise Eigentümers des Datensatzes signiert ist:
- die Vertragsinformationen;
- die Zugriffsanfrage;
- die Adressverweise; und
- die Dateninhalte eines Datensatzes.

Ziel dieser Ausführungsform ist es, die Authentizität von Datensätzen sicherzustellen, sowie den Zugriff darauf über Verträge einschränken zu können. Der Schutz der Authentizität von Datensätzen kann über eine digitale Signatur desjenigen die Daten schreibenden Teilnehmers umgesetzt werden. Während eine Kontrollinstanz mit der Durchsetzung eines Vertrags betraut werden kann, muss zusätzlich die Authentizität der Vertragsinformationen selbst gewahrt werden. Letztere lässt sich durch eine digitale Signatur eines berechtigten Teilnehmers über die Vertragsinformationen sicherstellen.

Das Vertrauen eines Teilnehmers in die Authentizität von Datensätzen und Vertragsinformationen hängt direkt von dem Vertrauen ab, welches der Teilnehmer demjenigen zur Signatur verwendeten Schlüssel beziehungsweise einer auf kryptographische Weise mit diesem Schlüssel assoziierten Identität eines Teilnehmers entgegenbringt. Dieses Vertrauen kann über bekannte Techniken wie dem direkten Austausch von Schlüsseln/Zertifikaten zwischen den Parteien, einer Public-Key-Infrastruktur inklusive Zertifikatsautoritäten oder Web-of-Trust-basierte Ansätze geschaffen werden.

Der in den letzten Abschnitten umrissene Ansatz lässt sich beispielsweise mit den im OpenPGP-Standard beschriebenen Mitteln implementieren.

In einer Ausführungsform sind ausschließlich mittels einer externen Zertifizierungsstelle zertifizierte Identitäten zulässig.

Es wird weiterhin in einer vorteilhaften Ausführungsform des Verfahrens vorgeschlagen, dass in den Vertragsinformationen zumindest eine der folgenden Zugriffsbedingungen enthalten ist:
- aktueller Ort des Teilnehmers beziehungsweise Ursprung der Zugriffsanfrage;
- Anzahl an Zugriffen, bevorzugt pro anfragende Identität;
- Zeitraum für Zugriffsberechtigung, bevorzugt abhängig von der anfragenden Identität; und
- Verwendungsumfang des Datensatzes.

Unter dem Verwendungsumfang sind die Rechte und Pflichten des Teilnehmers sowie des Datenspeichernden zu verstehen. Zu unterscheiden sind rechtliche und technische Vorgaben. Ein Beispiel für eine rechtliche Pflicht ist eine bestimmte Aufbewahrungsdauer. Ein Beispiel für eine technische Pflicht ist, dass über eine TLS-Verbindung [engl.: Transport Layer Security] auf die Daten zugegriffen wird.

Es wird weiterhin in einer vorteilhaften Ausführungsform des Verfahrens vorgeschlagen, dass als Erstfaktor oder Zweitfaktor für Schritt c. der Eigentümer des Datensatzes oder ein anderer berechtigter Teilnehmer eine Freigabe erteilen muss.

In dieser Ausführungsform erhält der Eigentümer des angefragten Datensatzes eine Mitteilung (beispielsweise eine Push-Nachricht mit Authentifizierungsabfrage). Erst mit einer Freigabe des Eigentümers oder eines anderen berechtigen Teilnehmers ist dann der Zugriff möglich, sofern gegebenenfalls vorhandene andere Zugriffsbedingungen erfüllt sind (beispielsweise Ort der Anfrage). In einer Ausführungsform ist der Eigentümer oder der betreffende andere berechtigte Teilnehmer ein Unternehmen, welches zusätzlich zu einer externen Kontrollinstanz einen Zugriff zumindest registrieren möchte. Dies ist beispielsweise für den Fall eines Fehlers oder Datenleaks von Vorteil, um über die registrierten Zugriffe möglicherweise Erkenntnisse gewinnen zu können. Es sei darauf hingewiesen, dass in einer Ausführungsform der Eigentümer selbst die Kontrollinstanz betreibt, und lediglich bevorzugt die Kontrollinstanz von einer unabhängigen Einheit betrieben wird.

Es wird weiterhin in einer vorteilhaften Ausführungsform des Verfahrens vorgeschlagen, dass beim Prüfen der Identität, der Zugriffsanfrage und/oder des Datensatzes mittels der Kontrollinstanz zudem eine Vertrauenswürdigkeitsstufe geprüft wird,
wobei bevorzugt eine externe Bestätigung eingeholt wird und/oder ein mittels einer externen Zertifizierungsstelle erstelltes Zertifikat genutzt wird.

Eine Vertrauenswürdigkeitsstufe ist beispielsweise für einen Teilnehmer eine (explizite oder implizite) Bewertung durch (zumindest einen) andere(n) Teilnehmer, oder für eine natürliche Person ein sogenanntes Führungszeugnis oder vergleichbare Zertifikate aus der realen Welt.

In einer vorteilhaften Ausführungsform wird ein digitales Zertifikat eingeholt, welches nicht unbedingt in der realen Welt eine Anwendung findet. Vielmehr ist beispielsweise eine externe Zertifizierungsstelle, bevorzugt eine von der Kontrollinstanz unabhängige Zertifizierungsstelle, mittels Erhebung von Daten und/oder durch eine einmalige (oder wiederholte) Registrierung eines Teilnehmers. Damit ist ein sehr hoher Grad eines Web of Trust erreicht. Es sei darauf hingewiesen, dass eine solche Abfrage bevorzugt eine Zugriffsbedingung ist und nicht zwangsläufig für jegliche Art von Datensätzen automatisch gelten muss, beispielsweise nicht für Datensätze, von welchen eine möglichst barrierefreie Verbreitung erwünscht ist, wie beispielsweise Werbemaßnahmen.

Es wird weiterhin in einer vorteilhaften Ausführungsform des Verfahrens vorgeschlagen, dass der bei der vorliegenden Zugriffsanfrage verwendete Adressverweis für einen Teilnehmer unlesbar und für die Kontrollinstanz lesbar ausgeführt ist.

Vergleichbar ist der Ansatz mit einem QR-Code, bei welchem eine (grundsätzlich beliebige) Anzahl von Informationen für den Menschen nur unter erheblichem Aufwand auslesbar ist, jedoch für eine Maschine in einem Bruchteil von einer Sekunde auslesbar ist. Hier ist abweichend davon ein Adressverweis (bevorzugt kryptographisch) verschlüsselt und für niemanden, auch nicht mithilfe einer Maschine (beispielsweise im Fall des QR-Codes mittels der Kamera eines Smartphones) auslesbar. Vielmehr ist der Adressverweis beispielsweise unvollständig und/oder in (scheinbar) zufälliger Weise verändert. Erst mit dem Schlüssel beziehungsweise einem festen (bevorzugt komplizierten) Algorithmus der Kontrollinstanz ist der Adressverweis lesbar gemacht, und dabei bevorzugt auch ausschließlich für die Kontrollinstanz selbst.

Damit ist es möglich, dass ein Repräsentant eines Adressverweises offen verbreitet wird, aber der eigentliche Adressverweis erst unter Zuhilfenahme von der Kontrollinstanz aufbereitbar ist. Damit ist es beispielsweise möglich, auf eine weitere Verschlüsselung von Datensätzen zu verzichten oder einen verhältnismäßig einfachen Verschlüsselungsgrad zu wählen, welcher ansonsten heutzutage für sich allein nicht mehr als ausreichend sicher angesehen würde, jedoch in der Bedingungsverkettung mit der Unlesbarkeit des Adressverweises ausreichend ist. Damit ist die Datenmenge verringerbar und/oder die Verarbeitungsgeschwindigkeit steigerbar.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die Zeichnungen nicht maßhaltig sind und zur Definition von Größenverhältnissen nicht geeignet sind. Es wird dargestellt in
- Fig. 1:: eine Pyramide eines Meta-Metamodells;
- Fig. 2:: ein Sequenzdiagramm von einer Verschlüsselung;
- Fig. 3:: ein Schaubild einer Datenverarbeitung in einer Multi-Provider-Umgebung;
- Fig. 4:: ein Sequenzdiagramm eines Registrierungsprozesses eines Teilnehmers;
- Fig. 5:: ein Sequenzdiagramm einer Erstellung einer Ressource;
- Fig. 6:: ein Sequenzdiagramm eines Hinzufügens einer Instanz zu einer Ressource;
- Fig. 7:: ein Sequenzdiagramm einer Gewährung eines Zugriffs auf Daten anhand eines Vertrags; und
- Fig. 8:: ein Schaubild mit der dritten und vierten Ebene einer praktischen Umsetzung eines Metamodells gemäß Fig. 1.

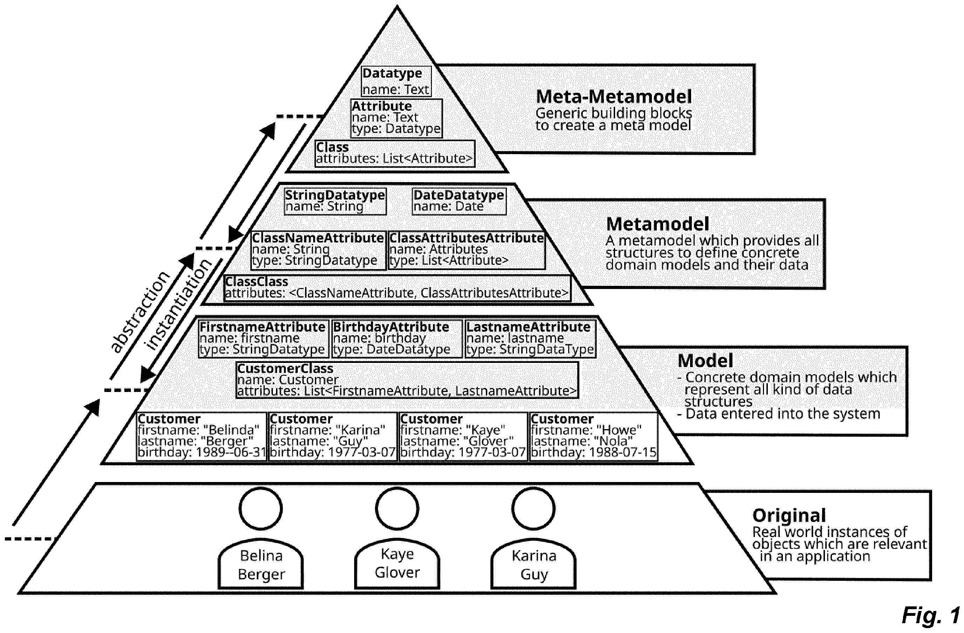

In Fig. 1 ist eine Pyramide eines Meta-Metamodells gezeigt. Das Meta-Metamodell hat vier verschiedene Ebenen (oder Schichten). Auf einer ersten Datenebene [grundständigste Ebene] umfasst das Meta-Metamodell so genannte Real-World-Instanzen von Objekten. Diese Objekte sind innerhalb eines Datensatzes relevant, liegen aber außerhalb der Anwendung selbst. Diese Instanzen können alles Mögliche sein, beispielsweise eine reale Person, ein Objekt oder ein virtuelles Gut. Die Fig. 1 zeigt als Beispiel drei verschiedene Personen.

Auf einer zweiten darüber angeordneten Ebene können konkrete domänenspezifische Modelle erstellt werden. Innerhalb der Modelle werden Dateninhalte, welche entweder von der ersten Ebene abstrahiert und/oder selbst erstellt werden, in das System eingegeben. Domänenspezifische Modelle beschreiben die Form von Datensätzen. Datensätze haben immer eine bestimmte, durch ein domänenspezifisches Modell definierte Datenstruktur und Datensätze enthalten Dateninhalte.

Jedes bereichsspezifische Modell ist eine Instanziierung eines Metamodells der nächsten, also dritten Ebene. Domänenspezifische Modelle können mit jeder gültigen Sprache erstellt werden (gültig bedeutet, dass die Sprache zur Erstellung von domänenspezifischen Modellen verwendet werden kann). Als Beispiel enthält die Fig. 1 ein Domänenmodell (bestehend aus den Attributen FirstName, LastName und Birthday sowie der Klasse Customer) und mehrere Datensätze, welche zum Teil Beziehungen zu den Personen der ersten Ebene haben.

Auf der dritten Ebene schaffen Metamodelle Strukturen, um konkrete domänenspezifische Modelle und deren Daten zu definieren. Jedes Metamodell ist ein direktes Modell jener auf der zweiten Ebene verwendeten Sprache. Gleichzeitig ist jedes Metamodell ein indirektes Modell eines domänenspezifischen Modells der zweiten Ebene. Jedes Metamodell ist eine Instanziierung von Metamodellen der vierten (und letzten) Ebene.

Metamodelle können mit jeder gültigen Sprache erstellt werden (gültig bedeutet, dass die Sprache in und aus dem Meta-Metamodell übersetzt und zur Definition einer Sprache für die Erstellung von domänenspezifischen Modellen verwendet werden kann). Als Beispiel enthält die Fig. 1 Strukturen, welche zur Definition eines Domänenmodells verwendet werden können (beispielsweise die Definition eines Attributs, welches einen Klassennamen enthält).

Auf der vierten Ebene erreichen wir die höchste Abstraktionsebene: das Meta-Metamodell. Das Meta-Metamodell definiert generische Bausteine, welche wiederum zur Erstellung von Metamodellen verwendet werden können. Jeder generische Baustein definiert sich selbst. Das Meta-Metamodell ist ein direktes Modell der Sprache, welche zur Erstellung von Metamodellen auf der dritten Ebene verwendet wird. Gleichzeitig ist das Meta-Metamodell ein indirektes Modell für jedes mit der Metamodellierungssprache erstellte Metamodell. Ein Meta-Metamodell kann mit jeder gültigen Sprache erstellt werden (gültig bedeutet, dass die Sprache in der Lage ist, ihre Komponenten zu definieren und zur Definition einer Sprache für die Erstellung von Metamodellen verwendet werden kann). Als Beispiel enthält die Abbildung drei generische Bausteine, welche in den meisten Datenmodellen verwendet werden: Datentyp, Attribut und Klasse.

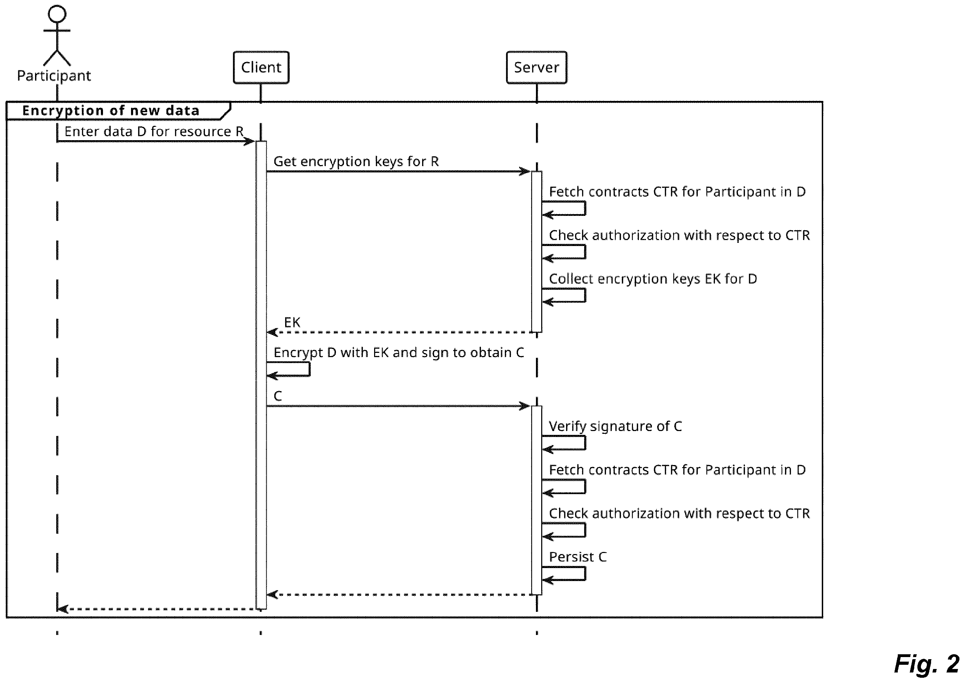

In Fig. 2 ist ein Sequenzdiagramm von einer Verschlüsselung gezeigt. Das vorliegende Beispiel erfasst nicht jeden Anwendungsfall. Das Beispiel lässt auch gängige Verfahrensschritte aus, um die Abbildung lesbar zu gestalten. Der Server kann auf dem Client selbst gehostet sein. Die dargestellten Schritte können unter Umständen auch in anderer Reihenfolge oder in Zusammenfassung geschehen, beispielsweise um die Performanz zu verbessern. Dies gilt genauso für die nachfolgend gezeigten und erläuterten Sequenzdiagramme und Schaubilder in Fig. 1 bis Fig. 8.

Die Abbildung stellt das Hinzufügen neuer Daten zu einem existierenden Datensatz, für den bereits ein Vertrag existiert, beispielhaft dar. Um die von einem Teilnehmer eingegebenen Daten einzupflegen, müssen sie verschlüsselt, signiert und an den Server übertragen werden.

Zunächst müssen die passenden Verschlüsselungsschlüssel für den Teilnehmer verfügbar gemacht werden. Dies ist nötig, weil möglicherweise unterschiedliche Teile eines Datensatzes mit verschiedenen Schlüsseln verschlüsselt werden müssen und diese sich auch während der Lebenszeit eines Datensatzes ändern können.

Informationen zu den Verschlüsselungsschlüsseln sind in den zum Datensatz gehörigen Vertragsinformationen enthalten. Beispielsweise könnte ein Vertrag die Verschlüsselungsschlüssel in verschlüsselter Form enthalten. Alternativ könnte der Vertrag auch eine Referenz auf einen Schlüssel enthalten, welchen der Teilnehmer auf anderem Wege erhalten hat. Die passenden Schlüssel und optional die Vertragsinformationen werden vom Server heruntergeladen, nachdem die Kontrollinstanz das Zugriffsrecht des Teilnehmers auf die Informationen überprüft hat. Analog überprüft der Teilnehmer die Authentizität und Konsistenz der vom Server erhaltenen Vertragsinformationen.

Zusätzlich zur Verschlüsselung der Daten werden diese noch vom Teilnehmer signiert. Dabei verbleiben die privaten Teile der verwendeten Signaturschlüssel stets bei dem Teilnehmer selbst. Die signierte und zum Server gesendete Datenstruktur enthält neben den verschlüsselten Daten noch vom Server lesbare Metadaten. Mithilfe dieser wird die Zulässigkeit der Änderungen am Datensatz durch den Teilnehmer vom Server überprüft und bei erfolgreicher Prüfung eingepflegt.

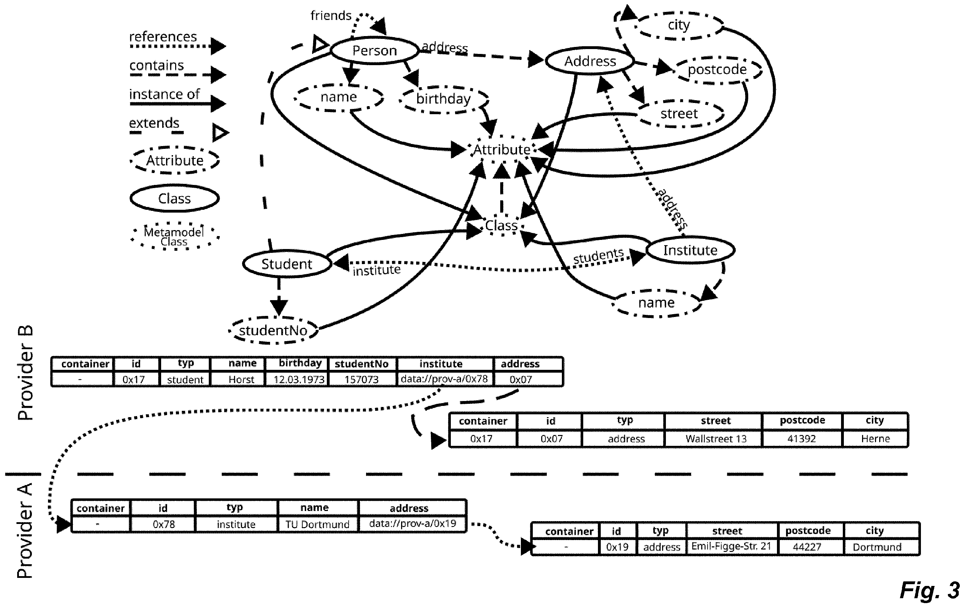

In Fig. 3 ist ein Schaubild einer Datenverarbeitung, im Speziellen hier um das Speichern von Daten, in einer Multi-Provider-Umgebung gezeigt. Im ersten Teil der Abbildung wird ein domänenspezifisches Modell von Klassen [engl.: Class], Attributen [engl.: Attribute(s)] und Instanzen [engl.: Instance] von Klassen und Attributen erläutert. Die Elemente in der Mitte der Fig. 3 erklären die Metadatentypen der vorliegenden Typen und leiten sich von einem Metamodell ab. In diesem Beispiel haben wir nur zwei Metadatentypen: Klasse und Attribut. Es gibt vier domänenspezifische Klassen, welche Person, Address, Student und Institute heißen. Jeder Pfeil mit durchgezogener Linie bedeutet, dass die Klasse oder das Attribut des domänenspezifischen Modells Instanzen der Metadatentypen sind.

Jede Klasse hat mindestens ein Attribut. Pfeile (gestrichelt mit großen Lücken), welche in der Legende mit der Bezeichnung "extends" markiert sind, bedeuten, dass die erweiternde Klasse die Attribute erbt beziehungsweise die Form der erweiterten Klasse erweitert. Die Attribute in Fig. 3 können in den folgenden Varianten dargestellt werden:
- In der ersten Variante sind Attribute primitiv (sie definieren einen einzigen oder mehrere, technisch gesehen, atomare(n) Wert(e)) und somit die Werte im Attribut-Wert-Paar implizit enthalten (beispielsweise Name eine Zeichenkette, eine Postleitzahl, eine ganze Zahl oder ähnliches). Dies gilt für die als Attribute bezeichneten Elemente (hier: Name (zweimal), Birthday, City, Postcode, Street und StudentNo).
- Attribute können auch Instanzen von Klassen referenzieren, was bedeutet, dass der Wert von durch das Attribut definierten Attribut-Wert-Paar nicht primitiv ist. Zum Beispiel kann eine Person ein Attribut mit dem Namen Address haben. Die Klasse, auf welche von dem Attribut aus verwiesen wird, besteht aus zwei oder mehr Attribut-Wert-Paaren. Die Adresse in der Abbildung hat drei Attribut-Wert-Paare (hier: City, Postcode, Street). Die Pfeile mit der Bezeichnung "references" beschreiben die Beziehungen zwischen den Klassen und gelten ebenfalls als Attribute. Die Pfeile mit der Bezeichnung "contains" beschreiben die Beziehungen zwischen Instanzen und Klassen und gelten ebenfalls als Attribute, Instanzen der Zielklasse sind allerdings hart mit Instanzen der Quellklasse verknüpft beziehungsweise leben sozusagen verknüpfte Instanzen in diesen. In unserem Beispiel hat jedes Institut eine Address. Jedes Institut hat mehrere Students, während jeder Student ein Institute hat. Eine Person kann mehrere Friends haben.

Im zweiten Teil der Fig. 3 wird die Verteilung der Daten innerhalb eines verteilten Netzwerks und auf der Grundlage des oben genannten domänenspezifischen Modells erläutert. In diesem Beispiel gibt es genau zwei Provider.

Provider **A** hostet Daten des Institute TU Dortmund. Wie wir sehen können, sind Typ und Name in derselben Instanz enthalten. Für die Adresse sehen wir einen id-Verweis auf eine andere Instanz. In diesem Fall ist die Adresse bei demselben Provider gespeichert.

Provider **B** hostet die Daten des Studenten Horst. Horst gehört zu einem Institut, welches durch das Attribut Institute repräsentiert wird. In diesem Attribut finden Sie den Verweis auf die ID des Institute der TU Dortmund. Wie wir bereits wissen, sind die Daten des Institute TU Dortmund bei einem anderen Provider gespeichert. Die Instanz Horst enthält auch ein Attribut Address, welches auf eine Instanz des Typs Address verweist. Diese Instanz ist ebenfalls bei Provider **A,** und sogar in der Instanz des Student Horst gespeichert, weil die zugehörige Attribut-Definition eine "containment"-Referenz definiert. Es ist zu erkennen, dass Daten auf mehreren Providern gleichzeitig liegen können. Dies gilt sogar für unterschiedliche Daten innerhalb eines Datensatzes oder sogar innerhalb einer einzelnen Instanz.

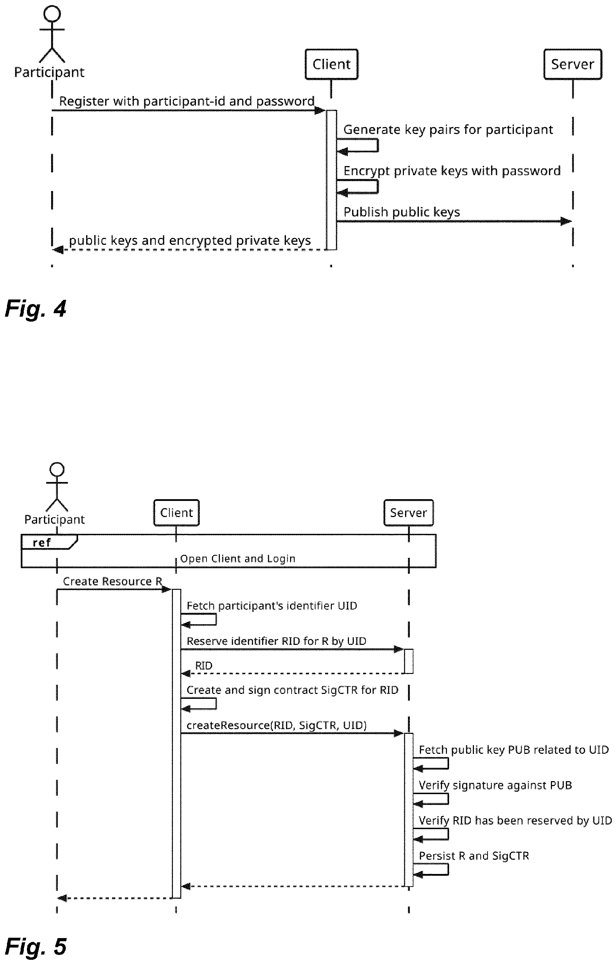

In Fig. 4 ist ein Sequenzdiagramm eines Registrierungsprozesses eines Teilnehmers gezeigt. Hier ist ein Sequenzdiagramm des Registrierungsprozesses innerhalb eines Systems gezeigt, welches gemäß dem hier vorgeschlagenen Verfahren entworfen wurde. In diesem Beispiel meldet sich der Teilnehmer [engl.: Participant] selbst zum ersten Mal an. Dazu verwendet er eine Benutzerkennung [engl.: Participant-ID] und ein Passwort [engl.: password]. Diese Daten werden auf einem Client eingegeben. Der Client generiert dann ein Public-Key/Private-Key-Paar für den Teilnehmer. Der private Schlüssel wird dann mit dem vom Teilnehmer eingegebenen Passwort verschlüsselt. Dieser nun verschlüsselte private Schlüssel und der öffentliche Schlüssel sind nun beide einsatzbereit. Der Client stellt dem Teilnehmer beides zur Verfügung und veröffentlicht den öffentlichen Schlüssel auf einem Server. Der Registrierungsprozess könnte nun, je nach Ausführung, abgeschlossen sein. Anbietern steht es frei, weitere Verifizierungsverfahren einzuführen und/oder zu nutzen.

In Fig. 5 ist ein Sequenzdiagramm einer Erstellung einer Ressource [engl.: Create Resource] R gezeigt, welches gemäß dem hier vorgeschlagenen Verfahren entworfen wurde. In diesem Beispiel hat ein Teilnehmer [engl.: Participant] bereits einen Client geöffnet und sich in sein Konto eingeloggt [engl.: Login]. Anschließend erstellt er eine Ressource. Der Client holt sich dann den privaten Schlüssel [engl.: Private Key] des Teilnehmers. Anschließend reserviert der Client zuerst eine beliebige, nicht vergebene Resource-ID beim Server für den Private Key des Teilnehmers. Danach erstellt und unterzeichnet der Client einen Vertrag [engl.: Contract] mit diesem Private Key. Der Client sendet dann eine Anfrage an den Server, um eine Ressource mit dem signierten Vertrag [engl.: Signed Contract] zu erstellen.

Der Server identifiziert den öffentlichen Schlüssel [engl.: Public Key] zur Benutzerkennung [engl.: User-ID], welcher auf einem Server gespeichert ist (dieser Server kann ein zweiter Server sein). Die Signatur [engl.: Signature] wird dann anhand des Public Key überprüft. In unserem Beispiel ist der Verifizierungsprozess erfolgreich und der Server fährt fort, die Ressource und den Signed Contract zu erstellen. Der Server informiert den Client über das erfolgreiche Ende des Prozesses, welcher wiederum den Teilnehmer darüber informiert. Der Prozess der Ressourcenerstellung ist damit abgeschlossen.

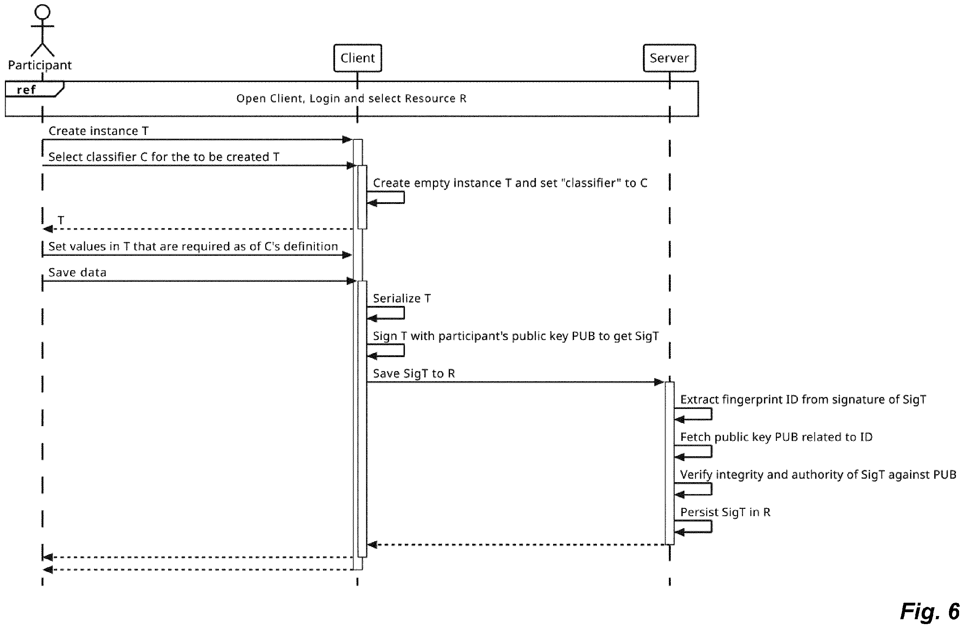

In Fig. 6 ist ein Sequenzdiagramm eines Hinzufügens einer Instanz zu einer Ressource gezeigt, welche wie zu Beginn der im dargestellten sequentiellen Ablauf angegeben, die folgende Vorbedingung enthält: Für dieses Beispiel existiert bereits eine Ressource und ist auf dem Server gespeichert.

Der Teilnehmer erstellt eine neue Instanz [engl.: Instance] T, beispielsweise von einer Klasse. In dieser Abbildung ist die Instanz nicht spezifiziert, weil es sich um eine beliebige Instanz handeln kann, welche bereits im Datensatz definiert ist. Der Teilnehmer wählt einen Typen [engl.: Classifier] C für die neu erstellte Instance T aus. Der Teilnehmer gibt diese Informationen in den Client ein. Der Client ist dann in der Lage, eine neue leere Instance T zu erstellen und klassifiziert die neue Instance T. Der Teilnehmer kann mit der Bearbeitung seiner Instance T fortfahren. Er kann nun Werte setzen. Weil er einen bestimmten Typen ausgewählt hat, muss der Teilnehmer die Werte entsprechend der Definition des Typs festlegen. Wenn der Teilnehmer fertig ist, teilt der Teilnehmer seinem Client mit, dass die soeben erstellten Daten gespeichert werden sollen.

Um die Daten zu speichern, serialisiert [engl.: Serialize] der Client die Instance T. In unserer bevorzugten Ausführungsform signiert [engl.: Sign] der Client die Instanz außerdem mit dem privaten Schlüssel [engl.: Private Key] des Teilnehmers [engl.: Participant]. Zu diesem Zeitpunkt verfügt der Client über eine signierte Instanz [engl.: Signed Instance] T. Der Client versucht, die Signed Instance T in der bereits eingerichteten Ressource R zu speichern. Der Server extrahiert den Fingerabdruck [engl.: Fingerprint] aus der Signatur [engl.: Signature] der Signed Instance T. Anschließend holt der Server den öffentlichen Schlüssel [engl.: Public Key] PUB, welcher mit dem Fingerprint verbunden ist. Nachdem der Server die Integrität und Autorität der Signed Instance T anhand des Public Key PUB erfolgreich verifiziert hat (wie in unserem Beispiel), persistiert er die Signed Instance T in der Ressource. Der Server informiert den Client über die erfolgreiche Speicherung, welcher seinerseits den Teilnehmer informiert. Der Prozess des Hinzufügens einer Instanz zu einer Ressource ist damit abgeschlossen.

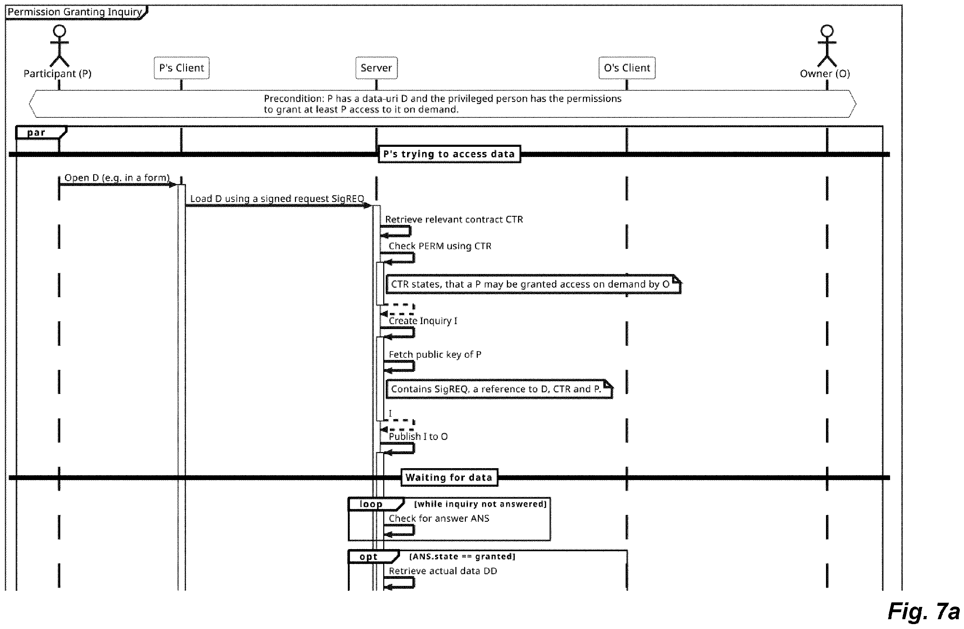

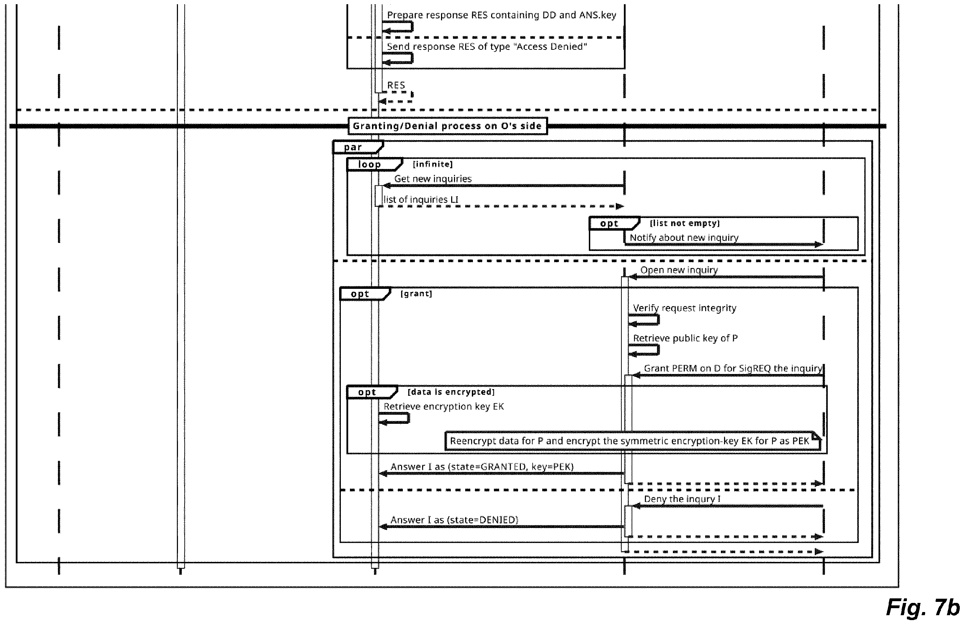

In Fig. 7 ist ein Sequenzdiagramm einer Gewährung eines Zugriffs auf Daten anhand eines Vertrags gezeigt. Hier ist der folgende Fall zum Gegenstand der Diskussion gemacht:
Ein Vertrag kann eine Bedingung enthalten, welche von einer privilegierten Entität, wie beispielsweise dem Eigentümer [engl.: Owner] O, auf Abruf gewährt werden muss. Für dieses Beispiel gibt es mehrere Vorbedingungen:
- Erstens verfügt der Teilnehmer [engl.: Particpant] P über eine einheitliche Ressourcenkennung für Daten.
- Zweitens verfügt die privilegierte Entität (in unserem Beispiel meist der Eigentümer O eines Datensatzes) über die erforderlichen Berechtigungen, um dem Teilnehmer zumindest auf Anfrage Zugang zu gewähren.

In einem ersten Schritt versucht der Teilnehmer P, auf die Daten D zuzugreifen. Dazu öffnet er per Adressverweis (hier: data-uri D) die Daten D. Der Client des Teilnehmers P versucht dann, mithilfe einer signierten Anfrage [engl.: Signed Request] SigREQ die Daten D von jenem (aus dem Adressverweis D abzuleitenden oder aufzulösenden) Server zu laden. Der Server ruft den Vertrag [engl: Contract] CTR ab, welcher sich auf den vorliegenden Adressverweis D bezieht. Er prüft die Berechtigung des Teilnehmers P anhand dieses Vertrags CTR.

In unserem Beispiel besagt der Vertrag CTR, dass der Teilnehmer P Zugriff auf den Datensatz erhalten kann, wenn der Eigentümer O ihm den Zugriff auf die Daten D erlaubt. Der Server wird diese Freigabe beim Eigentümer O anfragen. Er holt sich auch den öffentlichen Schlüssel [engl.: Public Key] des Teilnehmers P und fügt ihn der SigREQ hinzu. Die Anfrage an den Eigentümer O enthält nun die signierte Original-Anfrage SigREQ an den Server, den Adressverweis D, den vorliegenden Vertrag CTR und die Identität des anfragenden Teilnehmers P. Die Anfrage ist nun bereit für die Zustellung, sodass der Server sie für den Eigentümer O bereitstellt.

In unserem Beispiel wartet der Server nun auf die Entscheidung des Eigentümers O. Ein praktischer Anwendungsfall könnte ähnlich wie unser Beispiel aussehen:
Der Server führt eine Schleife [engl.: Loop] durch, in welcher er die Antwort [engl.: Answer] des Eigentümers O abwartet, während die Anfrage nicht beantwortet wird.
Sobald der Server eine Antwort erhält, hat er zwei Möglichkeiten:
   - Entweder er ruft die tatsächlichen Daten DD ab und bereitet eine Antwort {engl.: Response] RES an den Client des Teilnehmers P vor, welche die tatsächlichen Daten DD und einen Antwortschlüssel ANS.key enthält, oder
   - er sendet eine Antwort RES, in welcher erklärt wird, dass der Eigentümer O dem Teilnehmer P den Zugriff auf die fraglichen Daten D verweigert hat, also von der Art Zugriff verweigert [engl.: Access Denied].

In beiden Fällen informiert der Server den Client des Teilnehmers P, welcher seinerseits den Teilnehmer P informiert.

Auf der Seite der privilegierten Entität (beispielsweise des Eigentümers O) könnte der Anfrageprozess ähnlich wie in unserem Beispiel aussehen. Zunächst erhält der Client des Eigentümers O neue Anfragen, indem er eine Endlosschleife ausführt. Wenn der Server Anfragen erhalten hat, überträgt er die Liste der Anfragen [engl.: List Of Inquiries] LI an den Client des Eigentümers O. Der Client wiederum benachrichtigt den Eigentümer O über den Erhalt neuer Anfragen, welcher daraufhin die neue Anfrage auf seinem Client öffnet. Der Eigentümer O hat zwei Möglichkeiten: Er kann den Zugriff auf die angefragten Daten entweder gewähren oder verweigern.

Wenn er den Zugriff gewährt [engl: Granted], könnte der Prozess wie hier dargestellt aussehen: Der Client des Eigentümers prüft zunächst die Integrität der Anfrage.

Dann ruft er den öffentlichen Schlüssel des anfragenden Teilnehmers P ab. Der Eigentümer O selbst erteilt in der Anfrage die angefragte Berechtigungen auf den Adressverweis für die signierte Anfrage. Der Server empfängt die Antwort des Clients des Eigentümers O und verfährt wie oben beschrieben. Hier ist die Option enthalten, dass die Daten verschlüsselt sein können. Wenn dies der Fall ist, verschlüsselt der Server die Daten für den anfragenden Teilnehmer P neu und fügt den für den anfragenden Teilnehmer P verschlüsselten Schlüssel [engl.: Encryption Key] EK in seine Antwort ein.

Wenn der Eigentümer den Zugang verweigert [engl.: Denied], übermittelt sein Client die Antwort an den Server, welcher wiederum wie oben beschrieben vorgeht. Damit ist der Prozess der Zugangsgewährung beziehungsweise Verweigerung abgeschlossen und der Teilnehmer kann seinen Prozess fortsetzen oder nicht.

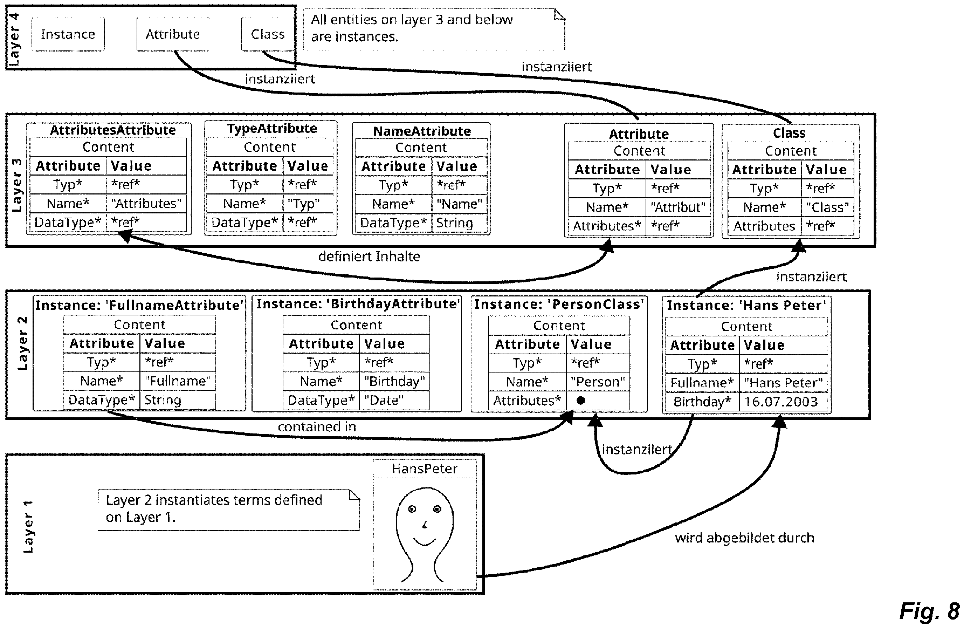

In Fig. 8 ist ein Schaubild mit der Ebenen [engl.: Layer] einer praktischen Umsetzung eines Meta-Metamodells gemäß Fig. 1 beispielhaft gezeigt und erläutert. Wie ersichtlich, enthält auch dieses Schaubild vier Ebenen (oder Schichten).

Auf einer ersten Ebene [engl.: Layer 1] haben wir ein Objekt der realen Welt. In diesem Fall handelt es sich um eine Person namens Hans Peter. Die Objekte der ersten Ebene werden durch den Inhalt der zweiten Ebene 2 [engl.: Layer 2] repräsentiert. In dieser zweiten Ebene gibt es eine Instanz [engl.: Instance] von Hans Peter. Diese Instanz enthält mehrere Attribut-Wert-Paare, beispielsweise den vollständigen Namen [engl.: FullName] der Person und ihren Geburtstag [engl.: Birthday]. Die Instanz Hans Peter ist eine Instanz von PersonClass. PersonClass definiert die Attribute, welche dieses domänenspezifische Modell für wichtig hält. PersonClass enthält auch Verweise auf die Definitionen der Attribute von PersonClass: FullnameAttribute und BirthdayAttribute.

Alle Instanzen des domänenspezifischen Modells sind Instanzen eines in der dritten Ebene [engl.: Layer 3] angelegten Meat-Metamodells. Auf der dritten Ebene gibt es mehrere abstrakte Instanzen, wie Class (welche nicht instantiierbar ist), Attribute, NameAttribute, TypeAttribute und AttributesAttribute. Mithilfe dieser Instanzen ist es möglich, domänenspezifische Modelle zu erstellen, wie das Modell auf der zweiten Ebene. Es gibt auch mehrere Beziehungen zwischen den Instanzen des Meta-Metamodells. Zum Beispiel definiert AttributesAttribute den Inhalt des Attributs Attributes in der Instanz Class.

In der vierten und obersten Ebene werden generische Bausteine definiert. Es handelt sich dabei um die generischen Bausteine Instanz [engl.: Instance], Attribut [Attribute] und Klasse [engl.: Class]. Wie hieraus hervorgeht, ist jede Entität der zweiten und dritten Ebenen (entweder direkt oder indirekt) eine Instanz dieser generischen Bausteine.

Mit dem hier vorgeschlagenen Verfahren ist eine private Datenhoheit mit einer einfachen Umsetzbarkeit und zugleich Geräteunabhängigkeit für den digitalen Austausch von Datensätzen geschaffen.

## Patentansprüche

1. Verfahren zum Verarbeiten von Daten in einem verteilten Netzwerk, aufweisend zumindest die folgenden Komponenten:
- ein Datenmodell mit vier Ebenen, von welchen die grundständigste Ebene die Datenebene ist und die übergeordneten Ebenen die Datenstrukturen in der jeweils untergeordneten Ebene zunehmend abstrakt definieren;
- einen geräteunabhängigen Adressverweis-Standard, mit welchem jeweils ein konkreter Datensatz in der Datenebene mit einem zugehörigen Adressverweis adressiert ist;
- Vertragsinformationen, welche obligatorisch mit einem konkreten Datensatz verknüpft sind; und
- eine Kontrollinstanz zum Prüfen und Freigeben von Zugriffen auf die Datensätze,
wobei zumindest die Datensätze mithilfe der drei untergeordneten Ebenen derart standardisiert sind, dass diese geräteunabhängig speicherbar und lesbar sind, und
wobei die Vertragsinformationen teilnehmerabhängige Zugriffsrechte auf den zugehörigen konkreten Datensatz beinhalten,
wobei das Verfahren zumindest die folgenden mittels der Kontrollinstanz ausgeführten Schritte umfasst:
auf eine Zugriffsanfrage eines Teilnehmers mit einer computerlesbaren Identität auf einen konkreten Datensatz über einen zugehörigen Adressverweis:
**a.** Abgleichen der Identität des Teilnehmers mit den zugehörigen Vertragsinformationen und Ermitteln einer Zugriffsberechtigung des anfragenden Teilnehmers;
**b.** Ermitteln zumindest einer beschränkenden Zugriffsbedingung gemäß den zugehörigen Vertragsinformationen für den anfragenden Teilnehmer und Prüfen, ob die zumindest eine ermittelte beschränkende Zugriffsbedingung erfüllbar ist; und
ausschließlich bei Vorliegen einer Zugriffsberechtigung des anfragenden Teilnehmers und bei Erfüllbarkeit der zumindest einen Zugriffsbedingung:
**c.** Freigeben eines Zugriffs im Rahmen der zumindest einen Zugriffsbedingung auf den angefragten konkreten Datensatz, wobei ohne ein solches Freigeben eines Zugriffs ein Teilnehmer mittels der Kontrollinstanz an einem Zugriff auf den betreffenden Datensatz gehindert ist.

2. Verfahren nach Anspruch 1, wobei
die Datensätze der Datenebene eine Klassifizierung aufweisen und der Dateninhalt zumindest ein Attribut beinhaltet,
wobei bei einer Mehrzahl von Attributen zumindest eines der Attribute, bevorzugt eines Attribut-Wert-Paars, die Datenform und/oder Datenmenge des zumindest einen anderen Attributs beschränkt, bevorzugt definiert.

3. Verfahren nach Anspruch 1 oder Anspruch 2, wobei
die Datenstrukturen eine Klassifizierung aufweisen und der Dateninhalt zumindest ein Attribut beinhaltet,
wobei beim Anlegen eines Datensatzes und/oder einer Datenstruktur eine vorhandene passende Klassifizierung benutzt wird oder, wenn eine passende Klassifizierung nicht vorhanden ist, eine passende Klassifizierung erzeugt wird.

4. Verfahren nach einem der vorhergehenden Ansprüche, wobei die Datensätze und/oder die Adressverweise individuell verschlüsselt sind, wobei bevorzugt die Kontrollinstanz keinen passenden Schlüssel dazu besitzt.

5. Verfahren nach einem der vorhergehenden Ansprüche, wobei die zugehörigen Vertragsinformationen verschlüsselt sind,
wobei bevorzugt:
- die Kontrollinstanz zumindest einen weniger von mehreren Schlüsseln besitzt, mittels welchen allen gemeinsam eine Schlüsselgruppe bildbar ist, wobei ausschließlich mittels der gebildeten Schlüsselgruppe die betreffenden Vertragsinformationen für die Kontrollinstanz lesbar machbar sind, und
- mit der Zugriffsanfrage eines Teilnehmers der zumindest eine fehlende Schlüssel zum Bilden der passenden Schlüsselgruppe für die Kontrollinstanz nutzbar gemacht ist,
wobei weiter bevorzugt der zumindest eine fehlende Schlüssel die computerlesbare Identität des Teilnehmers oder in dieser Identität für die Kontrollinstanz standardisiert auslesbar enthalten ist.

6. Verfahren nach einem der vorhergehenden Ansprüche, wobei zumindest eine der folgenden Komponenten mittels der Identität eines betreffenden Teilnehmers beziehungsweise Eigentümers des Datensatzes signiert ist:
- die Vertragsinformationen;
- die Zugriffsanfrage;
- die Adressverweise; und
- die Dateninhalte eines Datensatzes.

7. Verfahren nach einem der vorhergehenden Ansprüche, wobei in den Vertragsinformationen zumindest eine der folgenden Zugriffsbedingungen enthalten ist:
- aktueller Ort des Teilnehmers beziehungsweise Ursprung der Zugriffsanfrage;
- Anzahl an Zugriffen, bevorzugt pro anfragende Identität;
- Zeitraum für Zugriffsberechtigung, bevorzugt abhängig von der anfragenden Identität; und
- Verwendungsumfang des Datensatzes.

8. Verfahren nach einem der vorhergehenden Ansprüche, wobei als Erstfaktor oder Zweitfaktor für Schritt c. der Eigentümer des Datensatzes oder ein anderer berechtigter Teilnehmer eine Freigabe erteilen muss.

9. Verfahren nach einem der vorhergehenden Ansprüche, wobei beim Prüfen der Identität, der Zugriffsanfrage und/oder des Datensatzes mittels der Kontrollinstanz zudem eine Vertrauenswürdigkeitsstufe geprüft wird, wobei bevorzugt eine externe Bestätigung eingeholt wird und/oder ein mittels einer externen Zertifizierungsstelle erstelltes Zertifikat genutzt wird.

10. Verfahren nach einem der vorhergehenden Ansprüche, wobei der bei der vorliegenden Zugriffsanfrage verwendete Adressverweis für einen Teilnehmer unlesbar und für die Kontrollinstanz lesbar ausgeführt ist.
